# EUROPEAN PATENT SPECIFICATION

(11) **EP 2 496 865 B1**
(45) Date of publication and mention of the grant of the patent: **23.07.2014**
(21) Application number: 10828621.2
(22) Date of filing: 03.11.2010
(51) Int. Cl.: F16H 63/40, B60T 10/00, B60T 8/172, B60W 10/10, B60W 10/18, F16H 37/04, F16D 57/00, B60T 10/02, B60T 13/58

(54) **VEHICLE WITH A SECONDARY SUPPLEMENTARY BRAKE**
FAHRZEUG MIT SEKUNDÄRER ERSATZBREMSE
VÉHICULE MUNI D'UN FREIN SECONDAIRE SUPPLÉMENTAIRE

(30) Priority: 05.11.2009 SE 0950826
(43) Date of publication of application: 12.09.2012
(73) Proprietor: Scania CV AB, 151 87 Södertälje (SE)
(72) Inventor: GRANSTRÖM, Magnus, S-129 49 Hägersten (SE)
(86) International application number: PCT/SE2010/051195
(87) International publication number: WO 2011/056132

(56) References cited:
- EP-A2- 0 784 001
- WO-A1-2004/108467
- WO-A1-2004/108467
- WO-A1-2006/071173
- WO-A1-2007/061348
- WO-A1-2007/061348
- JP-A- 2005 329 926
- US-A- 5 357 444
- US-B1- 6 267 705
- US-B1- 6 267 705

## Description

### Field of the invention

The present invention relates to a vehicle and a method according to the preambles of the independent claims. The invention relates in particular to a vehicle with a secondary supplementary brake and to regulating the latter in connection with range shifts.

### Background to the invention

A known practice in vehicles, particularly in heavy vehicles, e.g. trucks, is to provide supplementary brakes as a complement to the vehicle's wheel brakes.

Supplementary brakes are used mainly in heavy vehicles with the primary object of reducing the wear on the wheel brakes, particularly when travelling on long downgrades where it is desirable to maintain a constant speed by braking. Using supplementary brakes makes it possible to save the wheel brakes for occasions when maximum braking force is needed. The braking force of the wheel brakes is greater than that of supplementary brakes, partly because the wheel brakes normally act upon all of the vehicle's wheels, whereas the supplementary brakes normally act only upon the powered wheels.

Another known practice is to distinguish between what are referred to as primary and secondary supplementary brakes for a vehicle. Primary and secondary denote the position of the supplementary brake in relation to the vehicle's main gearbox in that a primary supplementary brake is situated before the gearbox, whereas a secondary supplementary brake is situated after the gearbox, in the vehicle's power train.

Examples of primary supplementary brakes are so-called ISGs (integrated starters and generators) and retarders. A retarder is usually hydrodynamic or electrodynamic. A primary supplementary brake may also take the form of various types of engine brakes, e.g. a compression brake or an exhaust brake.

The braking effect which a primary supplementary brake can deliver depends on the engine speed, which makes it advantageous for the engine speed to be relatively high when a primary supplementary brake is used.

A secondary supplementary brake situated anywhere after the vehicle's main gearbox usually takes the form of a hydrodynamic or electrodynamic retarder.

The braking effect which a secondary supplementary brake can deliver depends on the vehicle's speed, since the supplementary brake is fitted on the output shaft of the gearbox and is therefore proportional to the rotation speed of the powered wheels.

A supplementary brake of the hydrodynamic retarder type usually comprises an impeller (rotor) and a turbine wheel (stator). The rotor is firmly coupled to, for example, the vehicle's drive shaft and rotates with it. The stator is firmly installed in a retarder housing which surrounds both the rotor and the stator. The retarder housing is connected to an oil reservoir. Oil is pushed into the retarder housing and is set in motion therein by the rotor, which pushes the oil towards the stator. As the stator cannot rotate, the oil flow is retarded and braking of the rotor and the whole vehicle can thus be effected. The braking force is regulated by the amount of oil in the retarder housing.

A supplementary brake of the electromagnetic retarder type usually comprises a stator in the form of electromagnets and a rotor in the form of mild-steel plates. The rotor is for example the vehicle's drive shaft and the stator is firmly fitted to the vehicle. Supplying current to the electromagnets exerts on the rotor when it rotates a braking force which can brake the vehicle.

US-6,267,705 refers to a regulating system for a primary supplementary brake, in particular a retarder, for a vehicle. The regulating system is adapted to adjusting the braking force for the supplementary brake according to a measurement signal in such a way that the braking force is reduced for the whole duration of a gear change procedure. Since a primary retarder is connected directly after the engine, it is particularly important to ensure that the retarder is deactivated when the power train is separated from the transmission or when the clutch is activated or the vehicle changes gear to neutral position, in order to prevent the retarder from braking the engine. If this is not done, a rapid load change due to a clutch engagement or disengagement event may lead to unacceptably low engine speed because of the braking action from the retarder. The object of US-6,267,705 is to eliminate this problem.

Vehicles with a secondary supplementary brake, preferably a retarder, have inter alia a problem in connection with downshifts across "the range" when the supplementary brake is active. This takes the form of "scraping", i.e. the occurrence of disturbing noise, when the range gear is engaged in some vehicles. The inventor has found that this is usually due to the shafts of the range gear being positioned obliquely when the retarder's brake torque is too great. Experiments have been done with various synchronising linings and cone angles but have not been found to totally solve the problem.

The object of the present invention is therefore to eliminate or substantially reduce the aforesaid problem of disturbing noise associated with changing gear with the range gear.

### Summary of the invention

The above objects are achieved with the invention defined by the independent claims.

Preferred embodiments are defined by the dependent claims.

According to the invention, when a gear change across the range is imminent, the brake torque for the secondary supplementary brake, e.g. a retarder (hydrodynamic or electrodynamic), has to be regulated down to a value which does not result in "range scrape". Experiments carried out show that the noise decreases with decreased supplementary brake torque to the point of ceasing completely when the brake torque is nil. Regulating the supplementary brake down for one or more seconds in connection with the range shift has only a slight effect on the vehicle's drivability in that the lost brake torque can preferably be compensated for by wheel brake application on vehicles with an electronically controlled brake system.

The downward regulation may for example commence (the later it takes place the better the performance of the supplementary brake, since the range shafts need time to position themselves correctly before the range begins to be operated) either when a target gear has been selected, or a predetermined amount of time after a target gear has been selected, or when neutral acknowledgement has been received to the effect that the range gearbox is in neutral position.

The downward regulation may be ended when the range gear has gone in and the brake torque for the supplementary brake is preferably brought back in a controlled way to a requested value.

### Brief description of the drawings

Figure 1 is a block diagram schematically illustrating the present invention.
Figures 2-4 are diagrams schematically illustrating various embodiments according to the present invention.

### Detailed description of preferred embodiments of the invention

The invention is described in detail below with reference to the drawings.

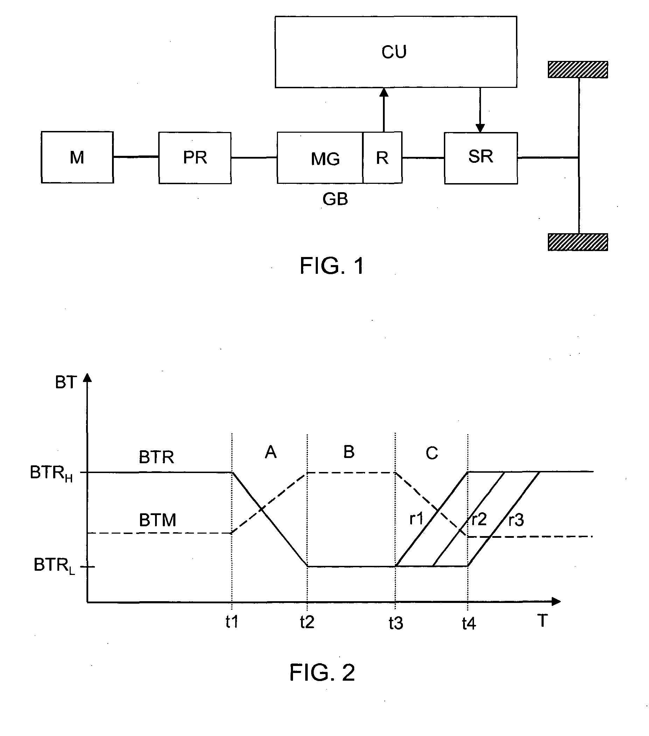

Figure 1 is a block diagram substantially depicting the power train for a vehicle comprising an engine M, a primary supplementary brake preferably in the form of a primary retarder PR, a gearbox GB which comprises inter alia a range gearbox R, and a secondary supplementary brake preferably in the form of a secondary retarder SR, and finally a schematically depicted wheel shaft with wheels.

In addition, an indicator unit (not depicted) is provided close to the range gearbox and is adapted to delivering to a control unit CU signals which indicate the state of the range gearbox and which inter alia comprise current gear, gear requested, neutral position, etc. These signals are represented in the drawing by an arrow from the range gearbox to the control unit.

When the indicator unit delivers to the control unit a signal indicating that a range shift is to take place, the control unit is adapted, upon receiving that signal, to regulating the braking force for the secondary supplementary brake SR downwards to a predetermined low level according to a predetermined pattern. This is illustrated by an arrow from the control unit to the secondary supplementary brake SR.

The control unit comprises inter alia a processor unit, e.g. a microprocessor, and is adapted inter alia to regulating and coordinating the vehicle's various brake systems in response to input signals and preset criteria.

Figure 2 is a schematic diagram of the brake torque BT for the secondary supplementary brake BTR (brake torque retarder) and for the wheel brakes BTM (brake torque main brake) as a function of time T.

At time t1 the control unit CU receives a signal which indicates that a range shift is to take place and which gear (target gear) is to be used.

During the period A, i.e. between t1 and t2, the range gearbox changes from current range gear to neutral position.

At time t2 the range gearbox engages a neutral position, in which it remains until time t3. The period between t2 and t3 is designated B.

During the period C, i.e. between t3 and t4, the range gearbox changes from the neutral position to the target gear.

At time t4 the target gear has been engaged.

The total time for the periods A-C is of the order of a few seconds. The diagrams in Figures 2-4 are schematic and intended to broadly illustrate the invention, so the relative magnitudes between the various periods of time are not to scale.

In Figure 2, the brake torque for the supplementary brake begins to decrease, according to a predetermined pattern, from a current high level BTR_{H} at time t1, i.e. when a new target gear has been selected, and reaches the predetermined low level BTR_{L} at time t2, i.e. when the range gearbox is in neutral position. What is essential is the time at which the downward regulation of the supplementary brake begins, i.e. t1, whereas the time at which the low level is reached may of course be earlier than as depicted in the diagram, i.e. within the period A, but has to be t2 at the latest.

According to a preferred embodiment, the braking force for the secondary supplementary brake at the predetermined low level is substantially nil. Some other level higher than nil but lower than BTR_{H} is also conceivable between the scope of the present invention, e.g. a given proportion of BTR_{H} between, for example, 5 and 25%.

According to the invention, the braking force of the supplementary brake remains at the predetermined low level for at least as long a time as the range shift takes. The time for reactivating the supplementary brake may for example be a predetermined time relatively close to when the target gear has been engaged. Alternatively, the braking force of the supplementary brake may remain at the predetermined low level until its indicator unit delivers a signal indicating that the range shift has been completed.

In Figure 2, three different times for reactivation of the supplementary brake are represented by r1, r2 and r3, where r1 denotes a ramp whereby the reactivation is initiated at time t3, r2 a ramp whereby the reactivation is initiated at a time between t3 and t4, and r3 a ramp whereby the reactivation is initiated at time t4.

The supplementary brake may of course be activated at some other time than as indicated above and there is within the scope of the present invention no need at all to reactivate the supplementary brake immediately after time t3, as it may instead remain at the low level.

Figures 2-4 show the change in the braking force BT as linear, but a specialist in the field will appreciate that the change may be non-linear, e.g. exponential.

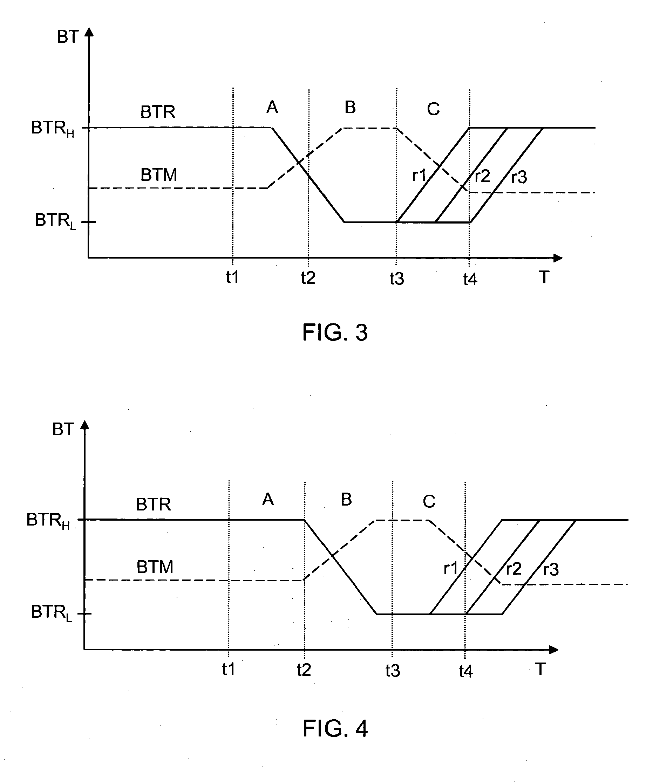

Figure 3 is a diagram schematically illustrating another embodiment according to the present invention, using the same reference notations as in Figure 2. According to this embodiment, the predetermined pattern results in the braking force of the supplementary brake being regulated downwards a predetermined amount of time after the indicator unit has indicated that a new target gear for the range gearbox has been selected, i.e. the downward regulation commences within the period A. The predetermined amount of time is of the order of 20-100 ms. In other respects the embodiment is as described in relation to Figure 2.

Figure 4 is a diagram schematically illustrating a further embodiment according to the present invention, using the same reference notations as in Figure 2. This embodiment results in the braking force of the supplementary brake being regulated downwards after the indicator unit has indicated that a neutral acknowledgement has been received from the range gearbox, i.e. the downward regulation begins at time t2. In other respects the embodiment is as described in relation to Figure 2.

According to another embodiment, the control unit is adapted to controlling the wheel brakes so that the reduced braking force from the secondary supplementary brake is substantially compensated for by an increased braking force from the wheel brakes. Figures 2-4 depict the braking force of the wheel brakes as a broken line BTM. In the embodiments illustrated in Figures 2-4, the regulation of the wheel brakes is relatively well adjusted to the downward regulation of the supplementary brake, but the times at which the braking force for the wheel brakes is increased/reduced may be completely independent of the times for the regulation of the supplementary brake. There may also be no need for any compensation at all.

The present invention also relates to a method for controlling a secondary supplementary brake, e.g. a retarder, in a power train for a vehicle, which method comprises:
delivering at least one indicator signal from an indicator unit to the effect that a range shift is to take place;
receiving said indicator signal by means of a control unit, and
delivering a control signal to the secondary supplementary brake, which in response to the control signal regulates the braking force for the secondary supplementary brake downwards to a predetermined low level according to a predetermined pattern.

According to the method, the braking force of the supplementary brake is intended to remain at the predetermined low level for a predetermined amount of time or alternatively to remain at the predetermined low level until its indicator unit delivers a signal indicating that the range shift has been completed.

The predetermined pattern means, according to an embodiment, that the braking force of the supplementary brake is regulated downwards immediately when the indicator unit indicates that a new target gear for the range gearbox has been selected.

The predetermined pattern means, according to another embodiment, that the braking force of the supplementary brake is regulated downwards a predetermined amount of time after the indicator unit has indicated that a new target gear for the range gearbox has been selected. The predetermined amount of time is of the order of 20-100 ms.

The predetermined pattern means, according to a further embodiment, that the braking force of the supplementary brake is regulated downwards after the indicator unit has indicated that a neutral acknowledgement has been received from the range gearbox.

The method comprises also the control unit being adapted to controlling the wheel brakes so that the reduced braking force from the secondary supplementary brake is substantially compensated for by an increased braking force from the wheel brakes.

The description of the above method pertains to Figures 1-4 and to portions of the above description pertaining to them.

The present invention is not limited to the preferred embodiments described above. Various alternatives, modifications or equivalents may be used. The above embodiments are therefore not to be regarded as limiting the invention's protective scope which is defined by the attached claims.

## Claims

1. A vehicle comprising a secondary supplementary brake (SR), a range gearbox (R), a control unit (CU), and an indicator unit which is situated close to the range gearbox and is adapted to delivering indicating signals which indicate the state of the range gearbox, **characterised in that** when the indicator unit delivers to the control unit a signal indicating that a range shift is to take place, the control unit is adapted to regulating the braking force for the secondary supplementary brake downwards to a predetermined low level (BTR_{L}) according to a predetermined pattern.

2. A vehicle according to claim 1, in which the secondary supplementary brake is a retarder.

3. A vehicle according to either claim 1 or 2, in which the braking force of the supplementary brake remains at the predetermined low level for a predetermined amount of time.

4. A vehicle according to either claim 1 or 2, in which the braking force of the supplementary brake remains at the predetermined low level until its indicator unit delivers a signal indicating that the range shift has been completed.

5. A vehicle according to any one of claims 1-4, in which the braking force for the predetermined low level is nil.

6. A vehicle according to any one of claims 1-5, in which the predetermined pattern means that the braking force of the supplementary brake is regulated downwards immediately when the indicator unit indicates that a new target gear for the range gearbox has been selected.

7. A vehicle according to any one of claims 1-5, in which the predetermined pattern means that the braking force of the supplementary brake is regulated downwards a predetermined amount of time after the indicator unit has indicated that a new target gear for the range gearbox has been selected.

8. A vehicle according to any one of claims 1-5, in which the predetermined pattern means that the braking force of the supplementary brake is regulated downwards after the indicator unit has indicated that a neutral acknowledgement has been received from the range gearbox.

9. A vehicle according to any one of claims 1-8, in which the control unit is adapted to controlling the wheel brakes so that the reduced braking force from the secondary supplementary brake is substantially compensated for by an increased braking force from the wheel brakes.

10. A method for controlling a secondary supplementary brake in a power train for a vehicle, comprising:
delivering at least one indicator signal from an indicator unit to the effect that a range shift is to take place,
receiving said indicator signal by means of a control unit, and
delivering a control signal to the secondary supplementary brake, which in response to the control signal regulates the braking force for the secondary supplementary brake downwards to a predetermined low level according to a predetermined pattern.

11. A method according to claim 10, in which the secondary supplementary brake is a retarder.

12. A method according to claim 10 or 11, in which the braking force of the supplementary brake remains at the predetermined low level for a predetermined amount of time.

13. A method according to claim 10 or 11, in which the braking force of the supplementary brake remains at the predetermined low level until its indicator unit delivers a signal indicating that the range shift has been completed.

14. A method according to any one of claims 10-13, in which the predetermined pattern means that the braking force of the supplementary brake is regulated downwards immediately when the indicator unit indicates that a new target gear for the range gearbox has been selected.

15. The method according to any one of claims 10-13, in which the predetermined pattern means that the braking force of the supplementary brake is regulated downwards a predetermined amount of time after the indicator unit has indicated that a new target gear for the range gearbox has been selected.

16. The method according to any one of claims 10-13, in which the predetermined pattern means that the braking force of the supplementary brake is regulated downwards after the indicator unit has indicated that a neutral acknowledgement has been received from the range gearbox.

17. The method according to any one of claims 10-16, in which the control unit is adapted to controlling the wheel brakes so that the reduced braking force from the secondary supplementary brake is substantially compensated for by an increased braking force from the wheel brakes.

## Patentansprüche

1. Fahrzeug,
umfassend eine sekundäre Zusatzbremse (SR), ein Bereichsgetriebe (R), eine Steuereinheit (CU) und eine Anzeigeeinheit, die nahe des Bereichsgetriebes angeordnet ist und dazu eingerichtet ist, Anzeigesignale auszugeben, die den Zustand des Bereichsgetriebes anzeigen,
**dadurch gekennzeichnet, dass** dann, wenn die Anzeigeeinheit ein Signal an die Steuereinheit ausgibt, das anzeigt, dass eine Bereichsschaltung stattfinden soll, die Steuereinheit dazu eingerichtet ist, die Bremskraft für die sekundäre Zusatzbremse gemäß einem vorbestimmten Schema nach unten auf ein vorbestimmtes niedriges Niveau (BTR_{L}) zu regulieren.

2. Fahrzeug gemäß Anspruch 1,
wobei die sekundäre Zusatzbremse ein Retarder ist.

3. Fahrzeug gemäß Anspruch 1 oder 2,
wobei die Bremskraft der Zusatzbremse auf dem vorbestimmten niedrigen Niveau für eine vorbestimmte Zeitdauer verbleibt.

4. Fahrzeug gemäß Anspruch 1 oder 2,
wobei die Bremskraft der Zusatzbremse auf dem vorbestimmten niedrigen Niveau verbleibt, bis dessen Anzeigeeinheit ein Signal ausgibt, das anzeigt, dass die Bereichsschaltung vervollständigt wurde.

5. Fahrzeug gemäß einem der Ansprüche 1-4,
wobei die Bremskraft für das vorbestimmte niedrige Niveau 0 beträgt.

6. Fahrzeug gemäß einem der Ansprüche 1-5,
wobei das vorbestimmte Schema bedeutet, dass die Bremskraft der Zusatzbremse unmittelbar nach unten reguliert wird, nachdem die Anzeigeeinheit anzeigt, dass ein neuer Zielgang für das Bereichsgetriebe gewählt wurde.

7. Fahrzeug gemäß einem der Ansprüche 1-5,
wobei das vorbestimmte Schema bedeutet, dass die Bremskraft nach einer vorbestimmten Zeitdauer nach unten reguliert wird, wenn die Anzeigeeinheit angezeigt hat, dass ein neuer Zielgang für das Bereichsgetriebe gewählt worden ist.

8. Fahrzeug gemäß einem der Ansprüche 1-5,
wobei das vorbestimmte Schema bedeutet, dass die Bremskraft der Zusatzbremse nach unten reguliert wird, nachdem die Anzeigeeinheit angezeigt hat, dass eine Neutral-Bestätigung von dem Bereichsgetriebe erhalten worden ist.

9. Fahrzeug gemäß einem der Ansprüche 1-8,
wobei die Steuereinheit dazu eingerichtet ist, die Fahrzeugbremsen so zu steuern, dass die reduzierte Bremskraft der sekundären Zusatzbremse im Wesentlichen durch eine erhöhte Bremskraft der Radbremsen kompensiert wird.

10. Verfahren zum Steuern einer sekundären Zusatzbremse in einem Antriebsstrang für ein Fahrzeug, umfassend:
Ausgeben von wenigstens einem Anzeigesignal von einer Anzeigeeinheit, dahingehend, dass eine Bereichsschaltung bevorsteht,
Erhalten des Anzeigesignals mittels einer Steuereinheit, und
Ausgeben eines Steuersignals an die sekundäre Zusatzbremse, die in Reaktion auf das Steuersignal die Bremskraft für die sekundäre Zusatzbremse gemäß einem vorbestimmten Schema nach unten auf ein vorbestimmtes niedriges Niveau reguliert.

11. Verfahren gemäß Anspruch 10,
wobei die sekundäre Zusatzbremse ein Retarder ist.

12. Verfahren gemäß Anspruch 10 oder 11,
wobei die Bremskraft der Zusatzbremse auf dem vorbestimmten niedrigen Niveau für eine vorbestimmte Zeitdauer verbleibt.

13. Verfahren gemäß Anspruch 10 oder 11,
wobei die Bremskraft der Zusatzbremse auf dem vorbestimmten niedrigen Niveau verbleibt, bis dessen Anzeigeeinheit ein Signal ausgibt, das anzeigt, dass die Bereichsschaltung vervollständigt wurde.

14. Verfahren gemäß einem der Ansprüche 10-13,
wobei das vorbestimmte Schema bedeutet, dass die Bremskraft der Zusatzbremse unmittelbar nach unten reguliert wird, wenn die Anzeigeeinheit anzeigt, dass ein neuer Zielgang für das Bereichsgetriebe gewählt wurde.

15. Verfahren gemäß einem der Ansprüche 10-13,
wobei das vorbestimmte Schema bedeutet, dass die Bremskraft nach einer vorbestimmten Zeitdauer nach unten reguliert wird, nachdem die Anzeigeeinheit angezeigt hat, dass ein neuer Zielgang für das Bereichsgetriebe gewählt worden ist.

16. Fahrzeug gemäß einem der Ansprüche 10-13,
wobei das vorbestimmte Schema bedeutet, dass die Bremskraft der Zusatzbremse nach unten reguliert wird, nachdem die Anzeigeeinheit angezeigt hat, dass eine Neutral-Bestätigung von dem Bereichsgetriebe erhalten worden ist.

17. Fahrzeug gemäß einem der Ansprüche 10-16,
wobei die Steuereinheit dazu eingerichtet ist, die Fahrzeugbremsen so zu steuern, dass die reduzierte Bremskraft der sekundären Zusatzbremse im Wesentlichen durch eine erhöhte Bremskraft der Radbremsen kompensiert wird.

## Revendications

1. Véhicule comprenant un frein supplémentaire secondaire (SR), une boîte de vitesses à plusieurs gammes, une unité de commande (CU), et une unité indicateur qui est située à proximité de la boîte de vitesses à plusieurs gammes et est apte à émettre des signaux indicatifs qui indiquent l'état de la boîte de vitesses à plusieurs gammes, **caractérisé en ce que**, lorsque l'unité indicateur transmet à l'unité de commande un signal indiquant qu'un changement de gamme doit se produire, l'unité de commande est apte à régler la force de freinage pour le frein supplémentaire secondaire sur un bas niveau prédéterminé (BTR_{L}) en conformité avec un schéma prédéterminé.

2. Véhicule selon la revendication 1, dans lequel le frein supplémentaire secondaire est un ralentisseur.

3. Véhicule selon la revendication 1 ou 2, dans lequel la force de freinage du frein supplémentaire reste au bas niveau prédéterminé pendant un laps de temps prédéterminé.

4. Véhicule selon la revendication 1 ou 2, dans lequel la force de freinage du frein supplémentaire reste au bas niveau prédéterminé jusqu'à ce que son unité indicateur envoie un signal indiquant que le changement de gamme a été exécuté.

5. Véhicule selon une quelconque des revendications 1 à 4, dans lequel la force de freinage pour le bas niveau prédéterminé est nulle.

6. Véhicule selon une quelconque des revendications 1 à 5, dans lequel le schéma prédéterminé a pour effet que la force de freinage du frein supplémentaire est réglée dans le sens descendant dès que l'unité indicateur indique qu'un nouveau rapport cible pour la boîte de vitesses à plusieurs gammes a été sélectionné.

7. Véhicule selon une quelconque des revendications 1 à 5, dans lequel le schéma prédéterminé a pour effet que la force de freinage du frein supplémentaire est réglée dans le sens descendant un laps de temps prédéterminé après que l'unité indicateur a indiqué qu'un nouveau rapport cible pour la boîte de vitesses à plusieurs gammes a été sélectionné.

8. Véhicule selon une quelconque des revendications 1 à 5, dans lequel le schéma prédéterminé a pour effet que la force de freinage du frein supplémentaire est réglée dans le sens descendant lorsque l'unité indicateur a indiqué qu'un accusé de réception de point mort a été reçu de la boîte de vitesses à plusieurs gammes.

9. Véhicule selon une quelconque des revendications 1 à 8, dans lequel l'unité de commande est apte à commander les freins de roues de telle manière que la force de freinage réduite produite par le frein supplémentaire secondaire soit sensiblement compensée par une force de freinage augmentée produite par les freins de roues.

10. Procédé pour commander un frein supplémentaire secondaire dans une chaîne cinématique d'un véhicule, comprenant les étapes consistant à :
émettre au moins un signal d'indicateur issu d'une unité indicateur signalant qu'un changement de gamme doit se produire,
recevoir ce signal d'indicateur au moyen d'une unité de commande, et
transmettre un signal de commande au frein supplémentaire secondaire qui, en réponse au signal de commande, règle la force de freinage pour le frein supplémentaire secondaire dans le sens descendant sur un bas niveau prédéterminé en conformité avec un schéma prédéterminé.

11. Procédé selon la revendication 10, dans lequel le frein supplémentaire secondaire est un ralentisseur.

12. Procédé selon la revendication 10 ou 11, dans lequel la force de freinage du frein supplémentaire reste au bas niveau prédéterminé pendant un laps de temps prédéterminé.

13. Procédé selon la revendication 10 ou 11, dans lequel la force de freinage du frein supplémentaire reste au bas niveau prédéterminé jusqu'à ce que son unité indicateur émette un signal indiquant qu'un changement de gamme a été exécuté.

14. Procédé selon une quelconque des revendications 10 à 13, dans lequel le schéma prédéterminé a pour effet que la force de freinage du frein supplémentaire est réglée dans le sens descendant dès que l'unité indicateur indique qu'un nouveau rapport cible pour la boîte de vitesses à plusieurs gammes a été sélectionné.

15. Procédé selon une quelconque des revendications 10 à 13, dans lequel le schéma prédéterminé a pour effet que la force de freinage du frein supplémentaire est réglée dans le sens descendant un laps de temps prédéterminé après que l'unité indicateur a indiqué qu'un nouveau rapport cible pour la boîte de vitesses à plusieurs gammes a été sélectionné.

16. Procédé selon une quelconque des revendications 10 à 13, dans lequel le schéma prédéterminé a pour effet que la force de freinage du frein supplémentaire est réglée dans le sens descendant lorsque l'unité indicateur a indiqué qu'un accusé de réception de point mort a été reçu de la boîte de vitesses à plusieurs gammes.

17. Procédé selon une quelconque des revendications 10 à 16, dans lequel l'unité de commande est apte à commander les freins de roues de telle manière que la force de freinage réduite produite par le frein supplémentaire secondaire soit sensiblement compensée par une force de freinage augmentée produite par les freins de roues.
